# EUROPEAN PATENT SPECIFICATION

(11) **EP 2 028 097 B1**
(45) Date of publication and mention of the grant of the patent: **07.05.2014**
(21) Application number: 07744144.2
(22) Date of filing: 25.05.2007
(51) Int. Cl.: B62M 6/50

(54) **TORQUE DETECTOR AND ELECTRICALLY ASSISTED BICYCLE**
DREHMOMENTDETEKTOR UND ELEKTRISCH UNTERSTÜTZTES FAHRRAD
DÉTECTEUR DE COUPLE ET BICYCLETTE ASSISTÉE ÉLECTRIQUEMENT

(30) Priority: 31.05.2006 JP 2006151956
(43) Date of publication of application: 25.02.2009
(73) Proprietor: SUNSTAR GIKEN KABUSHIKI KAISHA, Takatsuki-shi, Osaka 569-1134 (JP)
(72) Inventor: YOSHIIE, Akihito, Takatsuki-shi, Osaka 5691134 (JP); YAMAGUCHI, Katsuhiro, Takatsuki-shi, Osaka 5691134 (JP)
(74) Representative: Jenkins, Peter David
(86) International application number: PCT/JP2007/060710
(87) International publication number: WO 2007/139021

(56) References cited:
- EP-A1- 1 193 171
- EP-A1- 1 473 219
- EP-A2- 0 765 804
- WO-A1-00/75006
- WO-A1-02/076813
- JP-A- 08 085 491
- JP-A- 2000 272 575
- JP-A- 2002 154 473
- JP-A- 2002 154 473
- JP-A- 2004 099 019

## Description

### TECHNICAL FIELD

The present invention relates to a torque detection apparatus that utilizes a one-way clutch and to a power-assisted bicycle incorporated with the same torque detection apparatus.

### PRIOR ART

A novel art has been developed in connection with a power-assisted bicycle, which teaches a use of a one-way clutch incorporated in it with a mechanism for detecting a pedaling force.

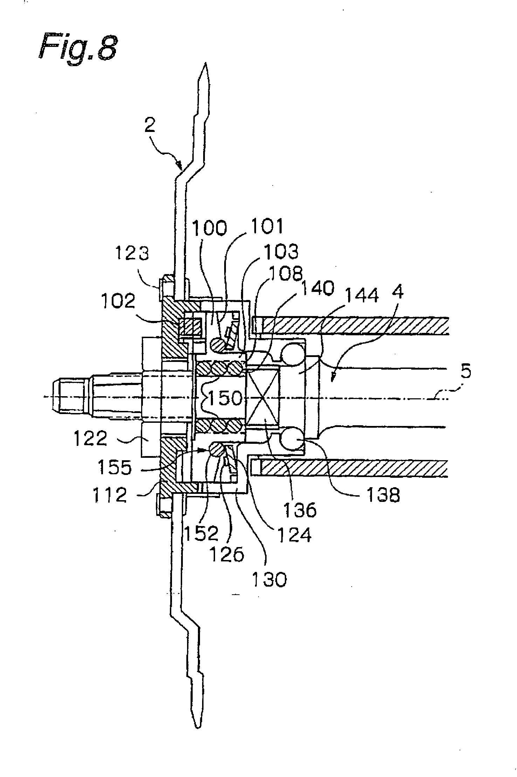

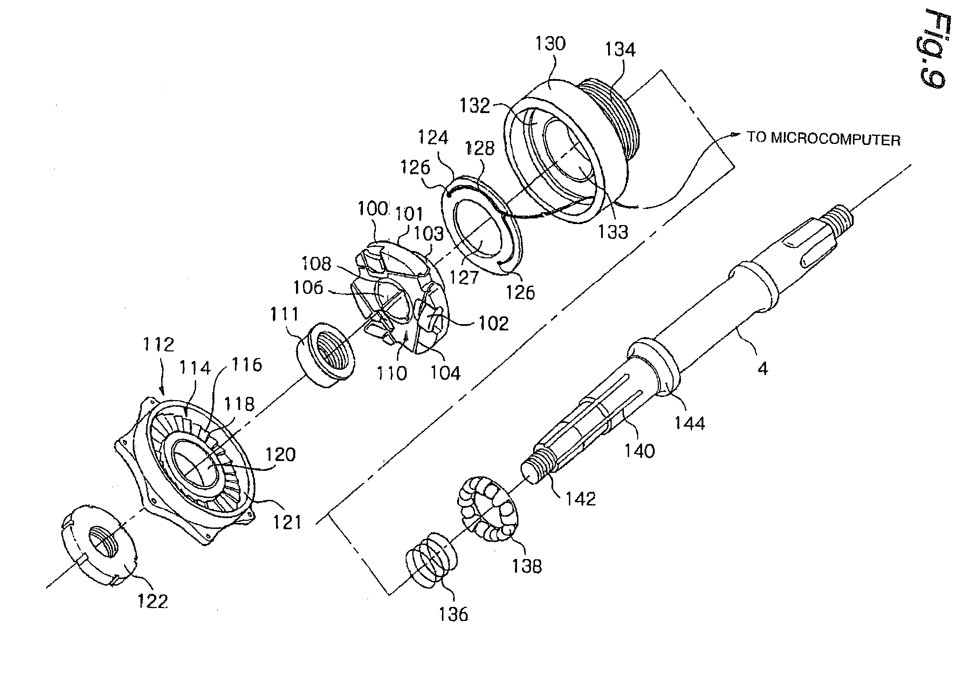

According to the art as stated above, a sprocket 2 of the power-assisted bicycle may be supported around a drive shaft 4 via a ratchet gear, as illustrated in Fig. 8. This ratchet gear comprises a gear tooth block 112 and a pawl block 100 which are positioned to face directly to each other, as illustrated in Fig. 9, as essential components.

A cylindrical portion 103 extends from a back surface 101 of the pawl block 100. The cylindrical portion 103 is also penetrated with a pawl block bore 106 which extends through a central region of the cylindrical portion 103. In the back surface 101, there is a circular groove 155 (Fig. 8) formed in an outer periphery of the cylindrical portion 103 and a number of steel balls 152 (Fig. 8) are rotationally mounted in the circular groove 155. Those components associatively provide, in the back surface 101, a bearing mechanism serving for bearing a load in the axial direction as well as serving as a sliding bearing.

A coned disc spring 124 is mounted over the cylindrical portion 103 and into abutment with the back surface 101 of the pawl block 100 with the cylindrical portion 103 extending through a center bore 127 of the coned disc spring 124. As it is, the coned disc spring 124 is placed in slidable contact with the back surface 101 via the plurality of steel balls 152 or the load-bearing element in such a direction that the coned disc spring 124 can resist elastically against a pressure from the pawl block 100. A pair of strain gauge is disposed on a surface of the coned disc spring 124 each at a location oppositely oriented by 180 degrees from each other in physical relationship. Those strain gauges 126 are electrically connected to a controller 14 via leads 128.

There is a set of first anti-rotation grooves 108 formed in an inner wall of the pawl block bore 106 and extending in the axial direction 5. A drive shaft 4 includes a plurality of second anti-rotation grooves 140 at four locations in an outer wall portion thereof, which is brought into sliding contact with the inner wall of the pawl block bore 106, such that the second anti-rotation grooves extend in the axial direction 5 so as to face to the first anti-rotation grooves 108. There are a number of steel balls 150 accommodated and thus occupying the space inside each of cylindrical channels defined by those groove pairs. This arrangement allows the pawl block 100 to be moved over the drive shaft 4 along the axial direction 5 with a minimum frictional resistance therebetween, while preventing a rotational movement of the pawl block relative to the drive shaft 4, but rather allowing the rotations of the pawl block 100 coupled with the drive shaft 4.

The pawl block 100 includes three rigid ratchet pawls 102 disposed in a second engaging surface 110 side, which are spaced to be equiangular along its circumferential direction. The ratchet pawls 102 are configured to pivot freely and thus have variable angular positions with respect to the second engaging surface 110. When free from any external force applied, the ratchet pawls 102 are placed under a small elastic force by means of spring bars 104 such that the racket pawls 102 can make lengthwise a predetermined angle with respect to the second engaging surface 110.

A plurality of ratchet teeth 114 is formed in a first engaging surface 121 of the tooth block 112 for engagement with the ratchet pawls 102. The ratchet teeth 114 are composed of relatively abrupt ramps 118 and relatively moderate ramps 116 with respect to the first engaging surface 121, which are disposed alternately and periodically in the circumferential direction of said tooth block. The tooth block 112 is supported around the drive shaft 4 with the ratchet teeth 114 placed in engagement with the ratchet pawls 102.

As the drive shaft 4 is rotated in one direction corresponding to a direction allowing for a transmission of a torque, the pawl block 100 is associatively rotated, and the ratchet pawls 102 are brought into abutment and thus latched with the relatively abrupt ramps 118 of the ratchet teeth 114. This allows the rotation of the pawl block 100 to be transmitted to the tooth block 112. At that time, since the ratchet pawls 102 are pivotally rotated so that the angle with respect to the second engaging surface 110 becomes greater, the pawl block 100 can, while rotating, slide along the axial direction of the drive shaft 4 away from the tooth block 112. The pawl block 100 in the sliding motion can press against the coned disc spring 124 not in the rotational motion via the steel ball bearing 152. The coned disc spring 124 will provide an elastic force and thus resist against the pawl block 100. This elastic force from the coned disc spring 124, when having reached the counterbalance, reflects a motive power that has been used to cause the sliding movement of the pawl block 100, or the torque (pedaling force) that has been applied to the drive shaft 4. Thus, it is possible to detect a magnitude of the pedaling force by detecting the amount of strain of the coned disc spring 124 by means of the strain gauges 126.

On the other hand, as the drive shaft 4 is rotated in another direction opposite to the one direction as described above, the ratchet pawls 102 will be brought into abutment with the relatively moderate ramps 116 of the ratchet teeth 114 and thus not into the latched position. Accordingly, the torque will not be transmitted from the pawl block 100 to the tooth block 112, but the pawl block 100 experiencing the elastic force from the coned disc spring 124 will move along the axial direction back to its original position.

As explained above, in a plane ratchet sensor, the steel ball bearing 152 mounted in the plane ratchet is pressed against the coned disc spring 124 located in the stationary side to thereby detect the magnitude of the pedaling force based on the amount of strain of the coned disc spring 124.

According to the art as described above, since the ratchet gear and the torque detection apparatus can be implemented in the form of a single mechanism, therefore the number of required parts will be reduced and thus fabrication of much smaller and lighter units as well as with a lower cost can be achieved. Further, significantly advantageously, the present invention can reduce or eliminate the number of modifications to a vehicle bicycle body which will be necessary, if an ordinary bicycle is converted to be a power-assisted bicycle.

### [Patent document 1]

EP1193171, on which the pre-characterising portion of claim 1 is based, discloses a power-assisted bicycle provided with a torque detection mechanism system. The bicycle includes a one-way clutch for transmitting only rotation of a drive shaft to a sprocket in a direction in which the bicycle proceeds.

### DISCLOSURE OF THE INVENTION

### PROBLEM TO BE SOLVED BY THE INVENTION

The prior art as discussed above is, however, associated with a problem inherent to its mechanism in which the steel balls are rotated, while they are pressing on the coned disc spring located in the stationary side, that a wearing of the coned disc spring and/or a rotational resistance associated with the mechanism could occur.

The present invention has been made in the light of the fact as noted above, and an object thereof is to provide a torque detection apparatus and a power-assisted bicycle, having a structure that can preserve the effectiveness of the prior art and further advantageously can reduce the wearing and/or the rotational resistance occurring in the parts of the one-way clutch.

### MEANS FOR SOLVING THE PROBLEM

A first aspect of the present invention provides a power-assisted bicycle according to claim 1.

According to the present invention, when the driver of a bicycle puts his/her foot on a pedal of the bicycle and presses on it, this pedaling force acts on the drive shaft. The pedaling force is transmitted to the one-way clutch via the drive shaft and ultimately to the driving wheel. During this operation, the one-way clutch means is deformed in dependence on the pedaling force. For example, if the magnetic is mounted inside the one-way clutch means, and when the position or the like of the magnet varies in association with the deformation of the one-way clutch, the magnetic field to be detected by the magnetic field detection means will vary, as well. In addition, even in a case where the magnet is mounted proximally to the one-way clutch, if the deformation of the one-way clutch does affect magnetic field lines, the magnetic field to be detected by the magnetic field detection means will vary. Accordingly, from the fact that this magnetic field is associatively related to the magnitude of the deformation of the one-way clutch or the pedaling force, the magnitude of the pedaling force can be estimated based on the detected magnetic field. Thus, the control means can control the auxiliary motive power based on the magnetic field of the magnet having a variable value indicative of the magnetic field corresponding to the deformation of the one-way clutch means in dependence on the pedaling force.

According to the present invention, it becomes possible to design such a one-way clutch means that can reduce the wearing and/or the rotational resistance occurring in the parts of the one-way clutch significantly in comparison to the prior art teaching that the magnitude of the pedaling force is determined by detecting the strain of the coned disc spring. For example, although the prior art design having the strain sensor typically attached to the coned disc spring requires that the coned disc spring should be mounted in the stationary side, the present invention permits the one-way clutch means to be configured such that the parts to be placed in contact with the coned disc spring can rotate together with the coned disc spring.

According to the present invention, the one-way clutch means has at least two blocks disposed adjacently to each other along the axial direction of the drive shaft and an elastic instrument means, such as a coned disc spring, a coil spring or a rubber member, wherein during revolutions in one direction, the two blocks are engaged to each other so as to increase an inter-block spacing in the axial direction under the resistance provided by an elastic force from the elastic instrument means, and during revolutions in a direction opposite to the one direction, the two blocks are disengaged from each other so as to decrease the inter-block spacing in the axial direction, and wherein any variation in the magnetic field is effected by any increase or decrease in the inter-block spacing. Either one of the two blocks is mounted on the drive shaft in such a manner that the either one of the two blocks can slidably move along the axial direction and concurrently a relative rotation of the either one of the two blocks with respect to the drive shaft can be prevented, and the other of the two blocks is coupled to the drive shaft in a manner to enable transmission of a torque thereto, wherein the one of the two blocks in the opposite side to the other of the two blocks is brought into abutment with the elastic instrument means in such a manner that the elastic instrument means can rotate in association with the one of the two blocks. According to this aspect, since the elastic instrument means is brought into abutment with the one of the two blocks in a manner to allow the elastic instrument means to rotate together with the one of the two blocks, meaning that there is no contact between the stationary side and the rotational side, therefore the rotational resistance from the elastic instrument means as well as the wearing of the elastic instrument means can be eliminated.

Optionally, the magnet is formed in a ring-shape and attached to the either one of the two blocks, or the one capable of sliding, concentrically with the drive shaft. The one of the two blocks that has been mounted with the magnet will shift its position along the axial direction in dependence on a magnitude of the applied pedaling force, and consequently the magnetic field produced in the stationary side will change. Accordingly, if the magnetic field detection means is attached to the stationary side, it becomes possible to determine an axial position of the one of the two blocks or the magnitude of the pedaling force based on the detected magnetic field.

Alternatively, the magnet is disposed at a location proximal to said detection means while a magnetic material or a diamagnetic material is formed in a ring-shape and attached to the either one of the two blocks, the one capable of sliding, concentrically with the drive shaft. The one of the two blocks that has been attached with the magnetic or diamagnetic material will shift its position along the axial direction in dependence on the applied pedaling force, and consequently, the distribution of the magnetic field of the magnet disposed at the predetermined location, such as a fixed location on a bicycle body frame, for example, will change under the affection from the magnetic or diamagnetic material. Accordingly, it becomes possible to determine an axial position of the one of the two blocks that has been mounted with the magnetic or diamagnetic material, or the magnitude of the pedaling force, based on the detected magnetic field. Preferably, the magnetic field detection means is disposed at a location proximal to the magnet.

The magnetic field detection means are disposed in at least two predetermined locations within a plane orthogonal to the axial line of the shaft, respectively, wherein the control means computes the magnitude of the pedaling force based on an average of detection signals from respective magnetic field detection means. In this connection, the computation of the average of the detection signals includes, in addition to the averaging operation in the general terminology, a summing operation on the detection signals. Most preferably, the magnetic field detection means are disposed in at least three predetermined locations within a plane orthogonal to the axial line of the shaft, respectively, the at least three predetermined locations being within the plane orthogonal to the axial line of the shaft, radially and equidistantly away from the axial line, and equally spaced in a circumferential direction. This arrangement can offset any variations in the axial position of the magnet resultant from a fluctuation in the parts of the one-way clutch and thus provide accurate detection of the pedaling force.

Preferably, the two blocks are a tooth block comprising a plurality of ratchet teeth formed in a first engaging surface and a pawl block comprising a plurality of ratchet pawls formed in a second engaging surface, and in this configuration, the tooth block and the pawl block are positioned such that the first and second engaging surfaces face directly to each other in substantially orthogonal orientation to the axial direction, and additionally, in one side, the plurality of ratchet teeth is composed of relatively abrupt ramps and relatively moderate ramps with respect to the first engaging surface, which are disposed in the first engaging surface alternately and periodically in the circumferential direction of the tooth block, while in the other side, each of the ratchet pawls is configured such that a length direction thereof is capable of resiliently pivoting either side from a centerline defining a predetermined angle with respect to the second engaging surface, wherein when the drive shaft rotates in one direction, the ratchet pawls in pivotal movement come into abutment with the relatively abrupt ramps so as to lock the relative rotation between the pawl block and the tooth block, and when the drive shaft rotates in another direction opposite to the one direction, the ratchet pawls come into abutment with the relatively moderate ramps so as to permit the relative rotation therebetween.

The power-assisted bicycle may comprise: an electromotive unit means for generating an auxiliary motive power; and a motive power transmission gear concentrically fixed to a sprocket, wherein the motive power transmission gear and an output gear of the electromotive unit means are mated each other so as to construct a force combining means for additionally introducing the auxiliary motive power in parallel with a pedaling force, and the other of the two blocks of the one-way clutch is defined in a plate surface of the motive power transmission gear.

Since the motive power transmission gear serves as the component for the one-way clutch, the force combining means for additionally introducing the auxiliary motive power to the pedaling force in parallel and also the pedaling force detection means, therefore the number of required parts can be reduced to resultantly provide a simplified construction and space saving in the axial direction in the power-assisted bicycle.

Preferably, a plurality of magnets is fixedly attached to the motive power transmission gear in one side of the plate surfaces of the gear such that respective magnets are equally spaced in a circumferential direction from each other, and the power-assisted bicycle comprises: a magnetic field detection means fixed to a bicycle body adjacent to the one side of the plate surfaces of the motive power transmission gear; and a counter means for counting magnetic field pulse signals from the magnetic field detection means, wherein a bicycle speed is determined based on a count value of the magnetic field pulse signals counted by the counter means. This provides the motive power transmission gear serving also as a component for the bicycle speed detection means.

A second aspect of the present invention provides a torque detection apparatus according to claim 9.

The torque detection apparatus of the present invention may be configured similarly in accordance with the power-assisted bicycle as described above.

### BRIEF DESCRIPTION OF THE DRAWINGS

Fig. 1 is a schematic view of a power-assisted bicycle according to an embodiment of the present invention;
Fig. 2 is a schematic diagram illustrating a control system of a power-assisted bicycle as shown in Fig. 1;
Fig. 3 is a side elevational view of a one-way clutch incorporated with a torque detection mechanism according to an embodiment of the present invention for use with a power-assisted bicycle as shown in Fig. 1;
Fig. 4 is an illustration depicting a pawl block of a one-way clutch and a configuration of a spring bar used in the pawl block, wherein Fig. 4(a) is a perspective view of the pawl block with the spring bar mounted thereon, Fig. 4(b) is a perspective view of the pawl block with the spring bar having been dismounted and Fig. 4(c) is a side elevational view of the spring bar, respectively;
Fig. 5 is a schematic diagram depicting a mating condition between a tooth and a pawl of a one-way clutch (ratchet gear) for illustrating a principle of pedaling force detection in a power-assisted bicycle as shown in Fig. 1;
Fig. 6 is an illustration of an exemplary anti-rotation means for preventing a relative rotation of a pawl block with respect to a drive shaft, wherein Fig. 6(a) is a top view illustrating a configuration of a ball spline, Fig. 6(b) is a top view illustrating a spline key and Fig. 6(c) is a top view illustrating a key slot, respectively;
Fig. 7 presents a front view and a side elevational view, illustrating a motive power transmission gear used with a force combining mechanism according to an embodiment of the present invention;
Fig. 8 is a side elevational view of a one-way clutch incorporated with a torque detection mechanism of the prior art; and
Fig. 9 is an exploded perspective view of the one-way clutch (ratchet gear) and the torque detection apparatus of the prior art as shown in Fig. 8. '

### EXPLANATION OF THE REFERENCE NUMERALS

- 1: Power-assisted bicycle
- 2: Sprocket
- 3: Frame
- 4: Drive shaft
- 11: Power assisting unit
- 12: Chain
- 14: Micro computer
- 15: Amplifying circuit
- 17: Battery
- 22: Driving wheel (rear wheel)
- 37: Electric motor
- 37a: Output shaft of an electric motor
- 99: One-way clutch
- 100: Pawl block
- 102: Ratchet pawl
- 108: First anti-rotation groove
- 112: Tooth block
- 114: Ratchet tooth
- 137: Coned disc spring
- 140: Second anti-rotation groove
- 150: Steel ball
- 151: Support disc
- 161: Ring-shaped permanent magnet
- 162: Hall element
- 164: Permanent magnet
- 200: Motive power transmission gear
- 202: Permanent magnet for crank angle detection
- 204: Tooth block of a motive power transmission gear
- 206: Fixing pin
- 210: Hall element for crank angle detection
- 220: Gear
- 222: Output shaft of an auxiliary motive power unit

### DESCRIPTION OF THE PREFERRED EMBODIMENTS

Preferred embodiments of the present invention will now be described with reference to the attached drawings. It is to be noted that those components according to the embodiments as illustrated in the drawings that are similar to the components in conjunction with the prior art as shown in Figs. 8 and 9 are designated by using like reference numerals as those used with the components of the prior art.

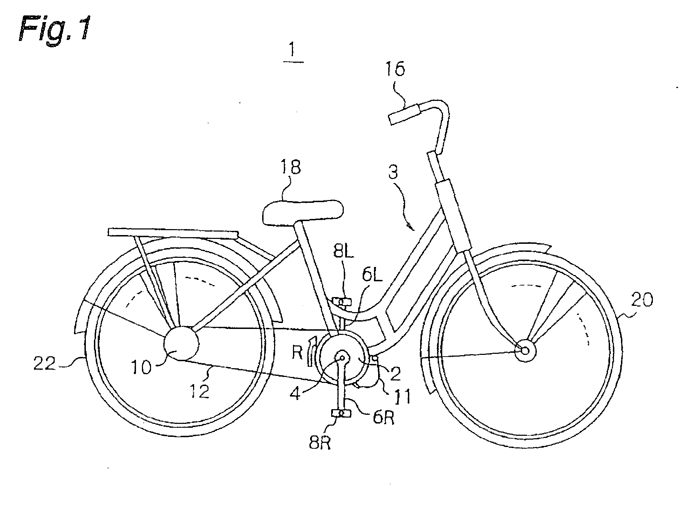

Fig. 1 presents an overview of a power-assisted bicycle 1. As illustrated, an essential framework part of the power-assisted bicycle 1 comprises a bicycle body frame 3 made of metal pipe, as with an ordinary bicycle, and the bicycle body frame 3 is mounted with a front wheel 20, a rear wheel 22, a handle 16, a saddle 18 and the others in a known aspect.

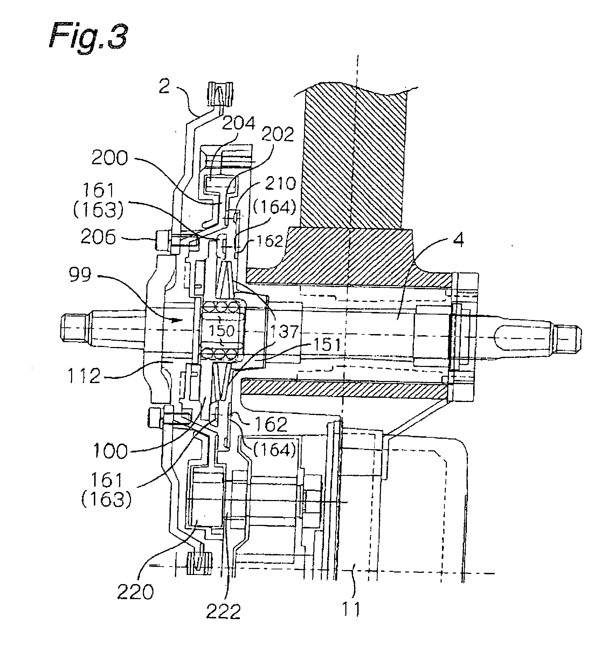

In addition, a drive shaft 4 is supported in a lower middle portion of the bicycle body frame 3 so as to be rotatable, and pedals 8L, 8R are mounted in a left and a right ends of the shaft 4 via crank bars 6L, 6R, respectively. To this drive shaft 4 is concentrically mounted a sprocket 2 via a one-way clutch (designated by 99 in Fig. 3) operable to transmit only revolutions of the drive shaft 4 in the R direction corresponding to a forward travelling direction of the bicycle body. An endless rotating chain 12 is extending across the sprocket 2 and a rear wheel drive mechanism 10 disposed in the center of the rear wheel 22.

The power-assisted bicycle 1 is equipped with an electromotive assisting unit 11 for generating an auxiliary electromotive power. The electromotive power may be transmitted to the driving wheel 22 by using a force combining mechanism, though not shown.

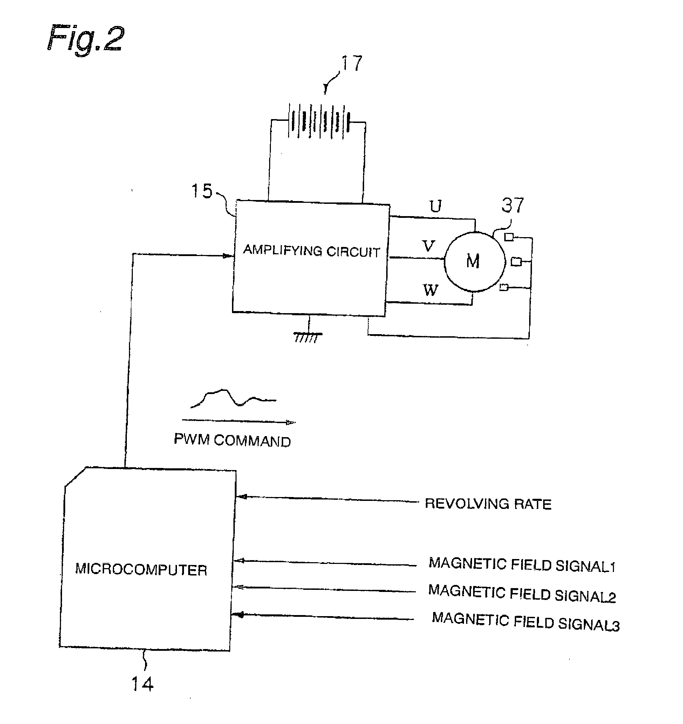

Referring to Fig. 2, an overview of a control system housed in the electromotive assisting unit 11 for control of the power-assisted bicycle 1 is presented. The control system of the power-assisted bicycle 1 comprises a single microcomputer 14 for providing an overall control on every electronic process across the bicycle, an electric motor 37 to which the PMW control is applicable and an amplifying circuit 5 directly connected to the microcomputer 14 for amplifying electric power of control signals therefrom. The amplifying circuit 15 is connected with a battery 17 (located externally to the unit 11) for power supplying to the electric motor 37. In addition, a reduction gear operable to decrease a revolving rate of the motor is housed in the electromotive assisting unit 11.

The microcomputer 14 may have inputs consisting of, at least, a revolving rate signal for computing a running speed of the bicycle and magnetic field signals 1, 2 and 3 for computing a pedaling force. Means for generating such signals will be discussed later. The microcomputer 14 executes the electronic operations, as it calculates the running speed and the pedaling force from those input signals and determine an assist ratio (auxiliary electromotive power/pedaling force) in accordance with a predetermined algorithm. The microcomputer 14 then outputs PWM commands sequentially corresponding to the auxiliary electromotive power in order to command the electric motor 37 to generate the auxiliary motive power corresponding to the assist ratio.

A pedaling force detection mechanism, a force combining mechanism and a bicycle speed detection mechanism of the power-assisted bicycle according to the embodiments of the present invention will be described below.

### Pedaling force detection mechanism

A pedaling force detection mechanism for outputting the magnetic field signals 1, 2 and 3 to be input to the microcomputer 14 will be described with reference to Figs. 3 to 7. This pedaling force detection mechanism can detect a magnetic field that will vary in association with any deformation of the one-way clutch 99 in dependence on the pedaling force.

The one-way clutch 99 comprises a pawl block 100 and a tooth block 112 as shown in Fig. 3.

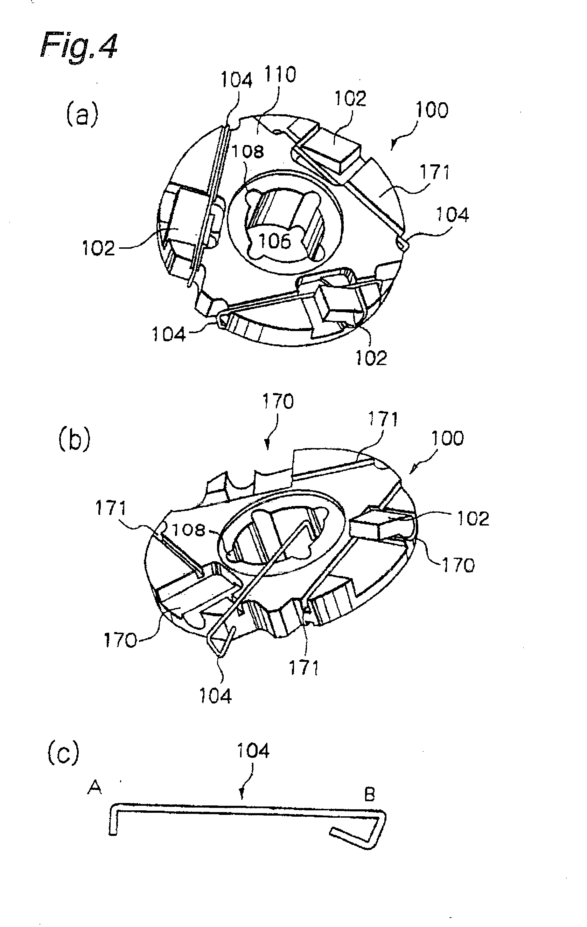

The pawl block 100 has a substantially disc configuration with a pawl block bore 106 formed in a central region thereof for receiving the drive shaft 4 and three rigid ratchet pawls 102 spaced to be equiangular along its circumferential direction in a second engaging surface 110 side opposing to the tooth block 112, as shown in Fig. 4(a). There are three depressions 170 formed in the pawl block 100 along the circumferential direction for accommodating the ratchet pawls 102, respectively, as shown in Fig. 4(b). Thus, the ratchet pawl 102 is able to pivot with its rotational axis portion accommodated in the depression 170 and so the ratchet pawl 102 may have an angle with respect to the second engaging surface 110 that will vary in dependence on this rotational motion.

Referring again to Fig. 4(b), the pawl block 100 is shown to include linear grooves 171 adapted to accommodate spring bars 104 adjacent to respective depressions 170, in which both ends of each of three linear grooves extend to an outer circumferential edge of the pawl block 100. As shown in Fig. 4(c), one end portion A of the spring bar 104 is bent approximately vertically, while the other end B is bent in an angular C-shape. To fit the spring bar 104 in the linear groove 171 of the pawl block 100, simply sliding the spring bar 104 within the liner groove until the angular C-shaped B segment is locked over the pawl block 100 like a clip clamping operation, as shown in Fig. 4(b), can readily achieve the fitting of the spring bar 104 in the pawl block 100. However, from a fear that the spring bar 104, as it is thus placed, will be possibly detached due to any pulling force acting from the B segment side, the vertically bent A segment is further engaged with a sidewall of the pawl block to avoid the detaching of the spring bar. Accordingly, the spring bar 104 in the illustrated embodiment can achieve both of easy fitting and prevention of detaching of the spring bar.

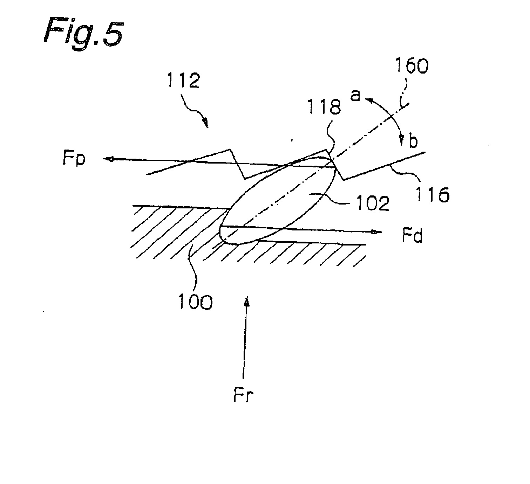

When the spring bar 104 is attached to the linear groove 171 of the pawl block 100, the ratchet pawl 102, when free from any external force, rises up such that a length direction thereof makes a predetermined angle with respect to the second engaging surface 110 (in an equilibrium orientation 160 as seen in Fig. 5). As shown in Fig. 5, as the ratchet pawl 102 is biased upward "a" or downward "b" from the equilibrium orientation, the spring bar 104 applies a small elastic force to the ratchet pawl 102 to offset the bias to bring the pawl 102 back into the equilibrium orientation 160.

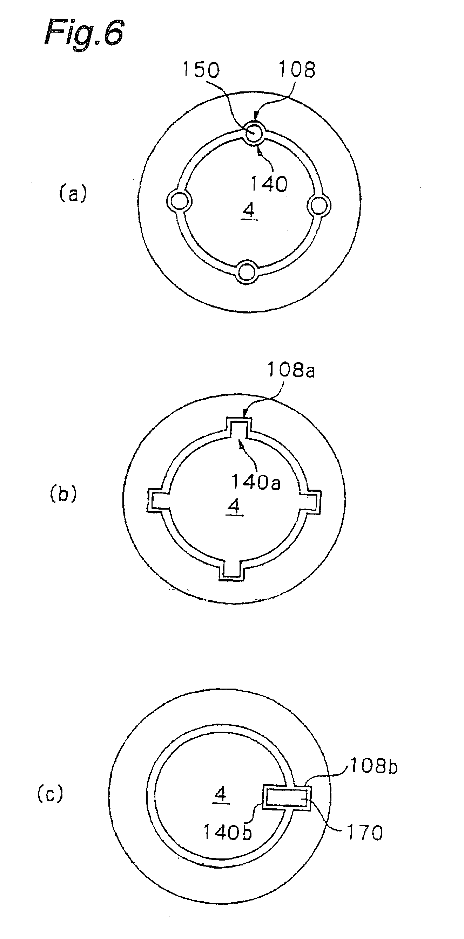

There are first anti-rotation grooves 108 provided at four locations in an inner wall of the pawl block bore 106 and extending in the axial direction 5. Additionally, second anti-rotation grooves 140 are formed at four locations in an outer wall of the drive shaft 4 to be placed in sliding contact with the inner wall of the pawl block 106 such that they extend in the axial direction 5 oppositely to those first anti-rotation grooves 108. As shown in Fig. 6(a), the first anti-rotation groove 108 and the second anti-rotation groove 140 facing thereto cooperate to form a cylindrical channel extending along the axial direction and a number of steel balls 150 are contained so as to occupy a space inside each of the cylindrical channels. This arrangement allows the pawl block 100 to be moved along the axial direction 5 with a minimum frictional resistance, while preventing a rotational movement of the pawl block relative to the drive shaft 4. This is a kind of ball spline, and other types of ball spline, including an endless rotational ball spline, for example, may be applied as such a slidable anti-rotation means.

Other means than the ball spline as shown in Fig. 6(a) may be possibly used to attach the pawl block 100 to the drive shaft 4. For example, one structure, so called of key and spline type, composed of an axially extending protrusion 140a formed on the drive shaft 4 and a third anti-rotation groove 108a formed in the pawl block 100 as shown in Fig. 6(b) may be applicable for the anti-rotation means. It is to be noted that in Fig. 6(b), the protrusion 140a may be formed in the pawl block 100 and the third anti-rotation groove 108a formed in the drive shaft 4. Further, another structure, so called of key and slot type, composed of an axially extending fourth anti-rotation groove 108b and an opposing fifth anti-rotation groove 140b formed in the pawl block 100 and the drive shaft 4, respectively, and additionally a key plate fitted in a rectangular slot defined by those paired grooves as shown in Fig. 6(c) may be applicable for the anti-rotation means, as well.

As shown in Fig. 3, a coned disc spring 137 is interposed between the pawl block 100 and a support disc 151 fixed to the drive shaft 4. Both ends of the coned disc spring 137 are placed in abutment with the back surface of the pawl block 100 and the support disc 151. Accordingly, the coned disc spring 137 can elastically resist against the axially inward sliding motion of the pawl block 100.

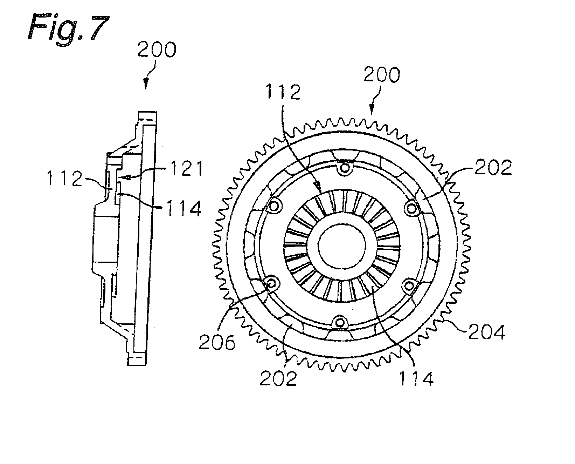

On the other hand, the tooth block 112 is formed on the first engaging surface 121 or a surface of the motive power transmission gear 200, as shown in Fig. 7. A plurality of ratchet teeth 114 is formed in the first engaging surface 121 for engagement with the ratchet pawls 102. The ratchet teeth 114 are composed of relatively abrupt ramps 118 and relatively moderate ramps 116 with respect to the first engaging surface 121, which are disposed alternately and periodically in the circumferential direction of said tooth block, as shown in Fig. 5. The tooth block 112 is supported over the drive shaft 4 in a manner that it can slidably contact to drive shaft 4, with its first engaging surface 121 placed to face directly to the second engaging surface 110 of the pawl block 100, thus making the engagement between the ratchet pawls 102 and the ratchet teeth 112 (Fig. 5). This means that the drive shaft 4 can be operatively coupled with the tooth block 112 exclusively via the engagement between the ratchet pawls 102 and the ratchet teeth 114.

The motive power transmission gear 200 equipped with the tooth block 112 is concentrically fixed with the sprocket 2 by means of a fixing pin 206, and further a pedal arm is attached to a tip of the drive shaft 4, as shown in Fig. 3. Thus, the ratchet gear 99 has been completed that operatively coupled the drive shaft 4 with the sprocket 2 such that only the revolutions generated by the pedaling force in the forward travelling direction of the bicycle may be transmitted to the sprocket 2.

In addition, a permanent magnet 161 formed in a ring shape is mounted in the pawl block 100 of the ratchet gear 99 concentrically with the drive shaft 4 and the pawl block 100. Preferably, the ring-shaped permanent magnet 161 is configured to have N-pole defined on one side surface and S-pole on the other side surface of the ring, respectively, and arranged such that a ring axial direction of the permanent magnet 161 is aligned with the axial direction of the ratchet gear 99.

Further, a plurality (three in the illustrated embodiment) of hall elements 162 is disposed at their predetermined locations, respectively, in a plane vertical to the axial line of the drive shaft 4 in order to detect the magnetic field. Preferably, the three predetermined locations occupied by the hall elements are arranged substantially equidistantly in the radial direction and substantially equiangularly in the circumferential direction around the axial line. Further, those predetermined positions occupied by the hall elements 162 correspond to the fixed locations on the bicycle body frame proximal to the ring-shaped permanent magnet 161. Those hall elements 162 are connected to the microcomputer 14 (Fig. 2). The magnet field detection signals 1, 2 and 3 output from those three hall elements 162, respectively, are input to the microcomputer 14 (Fig. 2) as described above.

In an alternative embodiment, a ring member 163 made of magnetic material, such as iron, may be used instead of the ring-shaped permanent magnet 161. In this case, the magnet 164 may be fixedly placed at a predetermined location, for example, a location proximal to the hall element 162, where magnet can react to the pawl block moving relatively. It is to be noted that the material of the ring member 163 may be also formed of any suitable materials that can affect and thus change the magnetic field of the magnet 164, including a diamagnetic material, for example.

### Force combining mechanism

A force combining mechanism of the power-assisted bicycle 1 will now be described with reference to Figs. 3 and 7.

Fig. 3 shows the motive power transmission gear 200 fixed to the sprocket 2 by means of the fixing pin 206, as described above. The motive power transmission gear 200 has a plurality of teeth 204 formed in an outer periphery, as shown in Fig. 7.

The teeth 204 of the motive power transmission gear 200 are to mate with a gear 220 mounted on a tip of an auxiliary motive power output shaft 222 of the power assisting unit 11. Accordingly, the auxiliary motive power output from the power assisting unit 11 is transmitted via the shaft 222 and the gear 220 to the motive power transmission gear 200, and then further transmitted from the motive power transmission gear 200 via the sprocket 2 and chain 12 to the driving wheel. A resultant force from the pedaling force combined with the auxiliary motive power can be thus achieved. Since the number of teeth 204 of the motive power transmission gear 200 is greater than the number of teeth of the gear 220, the motive power transmission gear 200 may act as a reduction gear, as well.

### Detection mechanism of bicycle speed

A bicycle speed detection mechanism of the power-assisted bicycle 1 will be described with reference to Figs. 3 and 7.

As shown in Fig. 7, twelve permanent magnets 202 are mounted on one side of the plate surfaces of the motive power transmission gear 200 so as to be equally spaced apart from each other along the circumferential direction. Those permanent magnets 202 are oriented such that one magnetic poles (N-poles or S-poles) are exposed in a surface side of the plate, while the other magnet poles are positioned opposite to the surface side, and the direction connecting between two poles of different magnetic polarities is aligned in parallel with the axial direction of the drive shaft 4. It is preferable that the magnetic poles of the twelve magnets exposed in the surface of the plate may be all identical, but magnets may be arranges such that the different magnetic poles of any adjacent magnets 202 are alternately positioned.

Referring to Fig. 3, the hall elements 210 are disposed at the locations fixed to the bicycle body frame and adjacent to a region of the plate surface of the motive power transmission gear 200 where the magnets 202 are mounted. A distance in the radial direction from the drive shaft 4 to the hall elements 210 is set to be substantially equal to the distance in the radial direction from the drive shaft 4 to the permanent magnets 202. Since the motive power transmission gear 200 is rotated in association with the rotation of the pedals, while the hall elements 210 are stationary positioned with respect to the bicycle body frame, therefore the magnetic fields produced by the permanent magnets pass across the detection zones of the hall elements 210 one after another in association with the pedal crank rotations. Accordingly, the hall elements 210 can output the detection signals having the number of pulses corresponding to the number of pedal crank rotations. These magnetic field pulse signals are input to the microcomputer 14 (Fig. 2) as the revolving rate signals.

Since the motive power transmission gear 200 rotates together with the pedal crank and the sprocket 2, the revolving rate of the motive power transmission gear 200 reflects the bicycle speed. Thus, the microcomputer 14 can compute the bicycle speed from the counts of the magnetic field pulse signals per unit time.

As described above, the motive power transmission gear 200 is operable as an integral instrument means, functionally covering the tooth block 112 of the one-way clutch 99 constructing the pedaling force detection means, the force combining mechanism, the reduction gear during force combining operation, the detection mechanism of bicycle speed and the pedaling force detection mechanism. This allows for reduction of the number of required parts and space saving in the axial direction in the power-assisted bicycle 1.

An operation in an embodiment of the present invention will now be described.

When a rider gives a pedaling force to the pedal 8R, 8L (Fig. 1) to cause the drive shaft 4 to rotate in the forward travelling direction of the bicycle body, this rotational force is transmitted to the pawl block 100 that is supported over the drive shaft 4 in a not-rotatable but slidable manner. In this operation, since the ratchet pawl 102 is given a force Fd corresponding to the pedaling force from the pawl block 100, the tips of the pawls are brought into abutment with the relatively abrupt ramps 118 of the ratchet teeth of the tooth block 112, attempting to transmit the force to the ratchet teeth. Since the ratchet tooth block 112 is coupled to the sprocket 2, the tips of the ratchet pawls 102 are under affection of a force Fp caused by the load for driving from the relatively abrupt ramps 118. The ratchet pawls, as given the oppositely acting forces Fp and Fd from both ends thereof, will rotate in the "a" direction to rise upward. At this time, the ratchet pawl block 100 tends to move in the axially inward direction due to the rising of the ratchet pawls 102, so as to push in the coned disc spring 137 interposed between the pawl block 100 and the support disc 151. The coned disc spring 137, in resistance against this action, will produce an elastic force Fr to act on the pawl block 100. This force Fr and the force reflecting the pedaling force causing the axial displacement of the pawl block 100 can reach equilibrium in a short time. Thus the axial position of the pawl block 100 can provide a physical quantity reflecting the pedaling force.

In the embodiment using the ring-shaped permanent magnet, the magnet field intensity to be detected by the hall elements 162 may vary in dependence on the axial position of the pawl block 100. Specifically, as the pedaling force increases, the pawl block 100 slidably moves in the axially inward direction and the permanent magnet 161 approaches the hall elements 162, and so the magnetic field intensity to be detected by the hall elements will increase. In contrast, when the pedaling force decreases, the pawl block 100 slidably moves in the axially outward direction and the permanent magnet 161 moves away from the hall elements 162, and so the magnetic field intensity to be detected by the hall elements will decrease.

The microcomputer 14 executes an averaging operation (including a simple adding operation) on the magnetic field detection signals from the detection by the three hall elements 162 to determine an average magnetic field intensity. The microcomputer 14 contains a look-up table indicating a functional relation between the magnetic field intensity and the axial position of the permanent magnet 161 reflecting a magnitude of the pedaling force that has been stored in a memory, and the microcomputer can refer to the table to determine a pedaling force T from the calculated average magnetic field intensity.

In this way, the microcomputer 14 now having the average over the magnetic fields in the axial direction as detected at two or more locations is able not only to improve the S/N ratio but also to determine the pedaling force T more accurately by offsetting any deviations in the magnetic field intensity due to the fluctuation of the pawl block 100.

It is to be noted that in an alternative embodiment using the ring member 163 made of magnetic or diamagnetic material, the magnetic field distribution of the magnet 164 will vary due to any change caused by affection from the magnetic or diamagnetic material in dependence on the axial position of the ring member 163. Accordingly, in the alternative embodiment as well, the pedaling force T can be determined in accordance with the detected magnetic field intensity in the manner as discussed above.

Subsequently, the microcomputer 14 computes, based on the determined pedaling force T, an auxiliary motive power Te to be applied for assistance and further computes and then outputs a control signal for commanding the electric motor 37 to rotationally drive the motive power transmission gear 200 for providing the auxiliary motive power. Preferably, the microcomputer 14 may convert the revolving rate signal detected by the revolving rate sensor (not shown) to the bicycle speed, and based on both of the pedaling force T and the bicycle speed, the microcomputer 14 can determine the appropriate auxiliary motive power Te so as to control the electric motor 37 to generate thus determined appropriate auxiliary motive power Te.

The pedaling force detection mechanism as stated above may bring about advantageous effects as follows:
(1) Since the coned disc spring 137 is placed in abutment with the pawl block 100 and the support disc 151, which are not capable of making relative rotations with respect to the drive shaft 4, therefore the coned disc spring 137 is due to rotate with the drive shaft 4, the pawl block 100 and the support disc 151 all together. Accordingly, there would be no friction occurring and thus no resistance developed between the coned disc spring 137 and the pawl block 100.
(2) Since the one-way clutch and the pedaling force detection mechanism are implemented in a single mechanism, therefore the number of required parts will be reduced and thus fabrication of much smaller and lighter units as well as with a lower cost can be achieved.
(3) Since the functional part serving for detecting the pedaling force is provided by the magnetic field detection sensor located proximal to the coned disc spring with respect to the magnetic force generation unit, therefore without occurrence of any wearing of the coned disc spring and/or the rotational resistance associated therewith, the precision as well as the durability of the torque detection apparatus can be improved.
(4) Since the smaller, lighter and more simplified construction level of the pedaling force detection mechanism can be achieved as stated in above articles (2) and (3), even an ordinary bicycle may be given an extensive possibility of having the pedaling force detection mechanism that will be advantageously mounted thereon.
(5) From the reasons as stated in above articles (2) and (3), since the present invention uses the non-contact type of the magnetic field-based pedaling force detection mechanism, therefore, in comparison with the prior art mechanism, the assist feeling having a better control response can be achieved.
(6) From the reasons as stated above articles (2) and (3), in comparison with the prior art mechanism (using a coil spring), any unnecessary pedaling work (until the detection by the sensor) will be eliminated, and so in the above example, the rider, when he/she steps and press on the pedals, may have the same feeling as he/she should have with an ordinary bicycle, while in contrast the rider may experience an elastic pedal feeling, when stepping and pressing on the pedals of the bicycle of the prior art.

Although the currently preferred embodiments of the present invention have been presented and described in detail, the present invention is not limited to these embodiments in precise form, but may be desirably or preferably modified within a scope of concept of the present invention.

For example, a modification may be desirably or preferably applied to the structure according to the present invention teaching that either one of the pawl block or the tooth block of the one-way clutch 99 may be mounted on the sprocket and the other may be mounted on the drive shaft. In one example, the pawl block 100 may be mounted in the sprocket side, while the tooth block 112 may be mounted on the drive shaft 4 in a slidable but not-rotatable manner, so that it is the tooth block 112 that is operable to press on the coned disc spring 137.

In addition, the type and shape of the elastic material placed for resistance against the deformation of the one-way clutch 99 may be modified desirably or preferably. Other members or materials than the coned disc spring may be used, including a coil spring and an elastic material such as a rubber and the like. Further, although the hall element is employed as one exemplary element for the means for detecting the magnetic field, the present invention is not limited to that but any other elements capable of detecting the magnetic field may be used.

Further, the location of the magnetic field detection means, the shape and mounting location of the magnet and the shape and mounting location of the magnetic or diamagnetic material may be also modified desirably or preferably, so far as the variation occurring in the magnetic field introduced in conjunction with the deformation of the one-way clutch can be detected. In addition, the number of magnetic field detection means, magnets and magnetic or diamagnetic materials are not limited to those in the above example but may be modified desirably or preferably.

## Claims

1. A power-assisted bicycle (1) in which an auxiliary motive power can be additionally introduced in dependence on a pedaling force acting on a drive shaft (4), said power-assisted bicycle (1) comprising:
a one-way clutch means (99) coupled to the drive shaft in a manner to only allow revolutions of said drive shaft in one direction to be transmitted to a drive shaft, wherein said one-way clutch means has at least two blocks (100, 112) disposed adjacently to each other along the axial direction of said drive shaft and an elastic instrument means (137), and wherein during revolutions in said one direction, said two blocks (100, 112) are engaged to eachother so as to increase an inter-block spacing in said axial direction under the resistance provided by an elastic force from said elastic instrument means (137), and during revolutions in a direction opposite to said one direction, said two blocks (100, 112) are disengaged from each other so as to decrease the inter-block spacing in said axial direction
a member (161, 164);
a detection means (162) disposed at a location where a characteristic by said member (161, 164) may vary in association with a deformation of said one-way clutch means (99) occurring in dependence on said pedaling force, wherein any variation in said characteristic is effected by any increase or decrease in said spacing between said two blocks (100, 112); and
a control means (14) for controlling said auxiliary motive power based on the characteristic detected by said detection means (162);
wherein either one of said two blocks (100, 112) is mounted on said drive shaft (4) in such a manner that said either one of said two blocks is slidably moved along said axial direction and concurrently a relative rotation of said either one of said two blocks with respect to said drive shaft is prevented, and the other of said two blocks (100, 112) is coupled to said drive shaft (4) in a manner to enable transmission of a torque thereto, wherein said one of said two blocks in the opposite side to said the other of said two blocks is brought into abutment with said elastic instrument means (137) in such a manner that said elastic instrument means (137) is rotatable in association with said one of said two blocks (100, 112);
**characterised in that** said member is a magnet (161, 164), the magnet (161) being formed in a ring-shape and attached to said either one of said two blocks (100, 112) concentrically with said drive shaft (4), or said magnet (164) being disposed at a location proximal to said detectionmeans (162) while a magnetic material or a diamagnetic material (163) is formed in a ring-shape and attached to said either one of said two blocks (100, 112) concentrically with said drive shaft (4);
**in that** said detection means (162) comprises magnetic field detection means (162) disposed at at least two predetermined locations within a plane orthogonal to the axial line (5) of said drive shaft (4), respectively, where the magnetic field by said magnet (161, 164) may vary in association with a deformation of said one-way clutch means (99) occurring in dependence on said pedaling force, wherein any variation in said magnetic field is effected by any increase or decrease in said spacing between said two blocks (100, 112), either one of which is moved with respect to said predetermined locations; and
**in that** said control means (14) is for controlling said auxiliary motive power based on the magnetic field detected by said magnetic field detection means (162), the control means (14) computing a magnitude of said pedaling force based on an average of detection signals from said respective magnetic field detection means (162).

2. A power-assisted bicycle in accordance with claim 1, in which said magnetic field detection means (162) is disposed at a location proximal to said magnet (164).

3. A power-assisted bicycle in accordance with claim 1, in which said magnetic field detection means (162) are disposed in at least three predetermined locations within a plane orthogonal to the axial line (5) of said drive shaft (4), respectively, said at least three predetermined locations being within said plane orthogonal to said axial line (5) of said drive shaft (4), radially and equidistantly away from said axial line (5), and equally spaced in a circumferential direction.

4. A power-assisted bicycle in accordance with any one of claims 1 to 3, in which said predetermined location is a fixed location on a bicycle body frame (3).

5. A power-assisted bicycle in accordance with any one of claims 1 to 4, in which said elastic instrument means (137) is selected from a group consisting of a coned disc spring, a coil spring and a rubber elastic material.

6. A power-assisted bicycle in accordance with any one of claims 1 to 5, in which
said two blocks (100, 112) are a tooth block (112) comprising a plurality of ratchet teeth (114) formed in a first engaging surface (121) and a pawl block (100) comprising a plurality of ratchet pawls (102) formed in a second engaging surface (110), said tooth block (112) and said pawl block (100) positioned such that said first and second engaging surfaces (121, 110) face directly to each other in substantially orthogonal orientation to said axial direction, wherein
said plurality of ratchet teeth (114) is composed of relatively abrupt ramps (118) and relatively moderate ramps (116) with respect to the first engaging surface (121), which are disposed in said first engaging surface (121) alternately and periodically in the circumferential direction of said tooth block (112); and
each of said ratchet pawls (102) is configured such that a length direction thereof is capable of resiliently pivoting either side from a centerline defining a predetermined angle with respect to said second engaging surface (110), wherein
when said drive shaft (4) rotates in said one direction, said ratchet pawls (102) in pivotal movement come into abutment with said relatively abrupt ramps (118) so as to lock the relative rotation between said pawl block (100) and said tooth block (112), and when said drive shaft (4) rotates in another direction opposite to said one direction, said ratchet pawls (102) come into abutment with said relatively moderate ramps (116) so as to permit said relative rotation therebetween.

7. A power-assisted bicycle in accordance with claim 1, further comprising:
an electromotive unit means (11) for generating an auxiliary motive power; and
a motive power transmission gear (200) concentrically fixed to a sprocket (2), wherein
said motive power transmission gear (200) and an output gear of said electromotive unit means (11) are mated each other so as to construct a force combining means for additionally introducing said auxiliary motive power in parallel with a pedaling force, and
said the other of said two blocks of said one-way clutch (99) is defined in a plate surface of said motive power transmission gear (200) .

8. A power-assisted bicycle in accordance with claim 7, in which
a plurality of magnets (202) is fixedly attached to said motive power transmission gear (200) in one side of said plate surfaces of said gear such that respective magnets (202) are equally spaced in a circumferential direction from each other,
said power-assisted bicycle further comprising:
a magnetic field detection means (210) fixed to a bicycle body adjacent to said one side of said plate surfaces of said motive power transmission gear (200); and
a counter means (14) for counting magnetic field pulse signals from said magnetic field detection means (210), wherein
a bicycle speed is determined based on a count value for the magnetic field pulse signals counted by said counter means.

9. A torque detection apparatus, comprising:
a drive shaft,
a one-way clutch means (99) operable to transmit exclusively revolutions of the drive shaft (4) in one direction, wherein said one-way clutch means (99) has at least two blocks (100, 112) disposed adjacently to each other along the axial direction of said drive shaft and an elastic instrument means (137), and wherein during revolutions in said one direction, said two blocks (100, 112) are engaged to each other so as to increase an inter-block spacing in said axial direction under the resistance provided by an elastic force from said elastic instrument means (137), and during revolutions in a direction opposite to said one direction, said two blocks (100, 112) are disengaged from each other so as to decrease the inter-block spacing in said axial direction
a member (161, 164);
a detection means (162) disposed at a location where a characteristic by said member (161, 164) varies in association with a deformation of said one-way clutch means (99) occurring in dependence on a torque acting on said drive shaft (4), wherein any variation in said characteristic is effected by any increase or decrease in said spacing between said two blocks (100, 112); and
a computer means (14) for computing said torque based on the characteristic detected by said detection means (162);
wherein either one of said two blocks (100, 112) is mounted on said drive shaft (4) in such a manner that said either one of said two blocks (100, 112) is slidably moved along said axial direction and concurrently a relative rotation of said either one of said two blocks (100, 112) with respect to said drive shaft (4) is prevented, and the other of said two blocks (100, 112) is not coupled to said drive shaft (4), wherein said one of said two blocks (100, 112) in the opposite side to said the other of said two blocks (100, 112) is brought into abutment with said elastic instrument means (137) in such a manner that said elastic instrument means (137) is rotatable in association with said one of said two blocks (100, 112);
**characterised in that** said member is a magnet (161, 164), the magnet (161) being formed in a ring-shape and attached to said either one of said two blocks (100, 112) concentrically with said drive shaft (4), or said magnet (164) being disposed at a location proximal to said detection means (162) while a magnetic material or a diamagnetic material (163) is formed in a ring-shape and attached to said either one of said two blocks (100, 112) concentrically with said drive shaft (4);
**in that** said detection means (162) comprises magnetic field detection means (162) disposed at at least two predetermined locations within a plane orthogonal to the axial line (5) of said drive shaft (4), respectively, where the magnetic field by said magnet (161, 164) varies in association with a deformation of said one-way clutch means (99) occurring in dependence on said torque acting on said shaft (4), wherein any variation in said magnetic field is effected by any increase or decrease in said spacing between said two blocks (100, 112), either one of which is moved with respect to said predetermined locations; and
**in that** said computer means (14) is for computing said torque based on the magnetic field detected by said magnetic field detection means (162), the computer means (14) computing a magnitude of said pedaling force based on an average of detection signals from said respective magnetic field detection means (162).

10. A torque detection apparatus in accordance with claim 9, in which said magnetic field detection means (162) is disposed at a location proximal to said magnet (164).

11. A torque detection apparatus in accordance with claim 9, in which said magnetic field detection means (162) are disposed in at least three predetermined locations within a plane orthogonal to the axial line (5) of said shaft (4), respectively, said at least three predetermined locations being within said plane orthogonal to said axial line (5) of said shaft (4), radially and equidistantly away from said axial line (5), and equally spaced in a circumferential direction.

12. A torque detection apparatus in accordance with any one of claims 9 to 10, in which said predetermined location is a fixed location on a bicycle body frame (3).

13. A torque detection apparatus in accordance with any one of claims 9 to 12, in which said elastic instrument means (137) is selected from a group consisting of a coned disc spring, a coil spring and a rubber elastic material.

14. A torque detection apparatus in accordance with any one of claims 9 to 13, in which
said two blocks (100, 112) are a tooth block (112) comprising a plurality of ratchet teeth (114) formed in a first engaging surface (121) and a pawl block (100) comprising a plurality of ratchet pawls (102) formed in a second engaging surface (110), said tooth block (112) and said pawl block (100) positioned such that said first and second engaging surfaces (121, 110) face directly to each other in substantially orthogonal orientation to said axial direction, wherein
said plurality of ratchet teeth (114) composed of relatively abrupt ramps (118) and relatively moderate ramps (116) with respect to the first engaging surface (121), which are disposed in said first engaging surface (121) alternately and periodically in the circumferential direction of said tooth block (112); and
each of said ratchet pawls (102) is configured such that a length direction thereof is capable of resiliently pivoting either side from a centerline defining a predetermined angle with respect to the second engaging surface (110), wherein
when said shaft (4) rotates in said one direction, said ratchet pawls (102) in pivotal movement come into abutment with said relatively abrupt ramps (118) so as to lock the relative rotation between said pawl block (100) and said tooth block (112), and when said shaft (4) rotates in another direction opposite to said one direction, said ratchet pawls (102) come into abutment with said relatively moderate ramps (116) so as to permit said relative rotation therebetween.

15. A torque detection apparatus in accordance with claim 9, further comprising a motive power transmission gear (200) to be mated with an output gear of a motive power generation unit means for generating a motive power, wherein
said the other of said two blocks (100, 112) of said one-way clutch (99) is formed on a plate surface of said motive power transmission gear (200).

16. A torque detection apparatus in accordance with claim 15, in which
a plurality of magnets (202) is fixedly attached to said motive power transmission gear (200) in one side of said plate surfaces of said gear such that respective magnets (202) are equally spaced in a circumferential direction from each other,
said torque detection apparatus comprising:
a magnetic field detection means (210) disposed adjacent to said one side of plate surfaces of said motive power transmission gear (200) ; and
a counter means (14) for counting magnetic field pulse signals from said magnetic field detection means (210), wherein
a revolving rate of said motive power transmission gear is determined based on a count value of the magnetic field pulse signals counted by said counter means (14).

## Patentansprüche

1. Kraftunterstütztes Fahrrad (1), bei dem eine Hilfstriebkraft in Abhängigkeit von einer auf einen Antriebsschaft (4) wirkenden Pedaltretkraft zusätzlich zugeführt werden kann, wobei das kraftunterstützte Fahrrad (1) umfasst:
ein Einwegkupplungsmittel (99), das auf eine solche Weise mit dem Antriebsschaft gekoppelt ist, dass nur Umdrehungen des Antriebsschafts in einer Richtung zu einem Antriebsschaft übertragen werden können, wobei das Einwegkupplungsmittel wenigstens zwei Blöcke (100, 112), die nebeneinander entlang der axialen Richtung des Antriebsschafts angeordnet sind, und ein elastisches Instrumentenmittel (137) aufweist, und wobei während Umdrehungen in der einen Richtung die zwei Blöcke (100, 112) miteinander in Eingriff stehen, so dass ein Zwischenblockabstand in der axialen Richtung unter dem Widerstand, der durch eine elastische Kraft von dem elastischen Instrumentenmittel (137) bewirkt wird, vergrößert wird, und während Umdrehungen in einer der einen Richtung entgegengesetzten Richtung die zwei Blöcke (100, 112) voneinander gelöst sind, so dass der Zwischenblockabstand in der axialen Richtung verringert wird;
ein Element (161, 164);
ein Erfassungsmittel (162), das an einer Stelle angeordnet ist, an der sich eine Eigenschaft des Elements (161, 164) in Verbindung mit einer Verformung des Einwegkupplungsmittels (99), die in Abhängigkeit von der Pedaltretkraft auftritt, ändern kann, wobei eine Änderung der Eigenschaft durch eine Vergrößerung oder Verringerung des Abstands zwischen den zwei Blöcken (100, 112) bewirkt wird; und
ein Steuermittel (14) zum Steuern der Hilfstriebkraft auf Grundlage der durch das Erfassungsmittel (162) erfassten Eigenschaft;
wobei einer der zwei Blöcke (100, 112) an dem Antriebsschaft (4) auf eine solche Weise angebracht ist, dass der eine der zwei Blöcke verschiebbar entlang der axialen Richtung bewegt wird und gleichzeitig eine relative Drehung des einen der zwei Blöcke mit Bezug auf den Antriebsschaft verhindert wird, und der andere der zwei Blöcke (100, 112) mit dem Antriebsschaft (4) auf eine solche Weise gekoppelt ist, dass die Übertragung eines Drehmoments auf diesen ermöglicht wird, wobei der eine der zwei Blöcke an der entgegengesetzten Seite zu dem anderen der zwei Blöcke auf eine solche Weise zum Anliegen an das elastische Instrumentenmittel (137) gebracht wird, dass das elastische Instrumentenmittel (137) in Verbindung mit dem einen der zwei Blöcke (100, 112) drehbar ist;
**dadurch gekennzeichnet, dass** das Element ein Magnet (161, 164) ist, der Magnet (161) in einer Ringform ausgebildet und an dem einen der zwei Blöcke (100, 112) konzentrisch zu dem Antriebsschaft (4) angebracht ist, oder der Magnet (164) an einer Stelle nahe zu dem Erfassungsmittel (162) angeordnet ist, während ein magnetisches Material oder ein diamagnetisches Material (163) in einer Ringform ausgebildet und an dem einen der zwei Blöcke (100, 112) konzentrisch zu dem Antriebsschaft (4) angebracht ist;
dass das Erfassungsmittel (162) Magnetfelderfassungsmittel (162) umfasst, die jeweils an wenigstens zwei vorgegebenen Stellen innerhalb einer Ebene, die senkrecht zu der axialen Linie (5) des Antriebsschafts (4) liegt, angeordnet sind, an denen sich das Magnetfeld des Magnets (161, 164) in Verbindung mit einer Verformung des Einwegkupplungsmittels (99), die in Abhängigkeit von der Pedaltretkraft auftritt, ändern kann, wobei eine Änderung des Magnetfelds durch eine Vergrößerung oder Verringerung des Abstands zwischen den zwei Blöcken (100, 112) bewirkt wird, von denen einer mit Bezug auf die vorgegebenen Stellen bewegt wird; und
dass das Steuermittel (14) zum Steuern der Hilfstriebkraft auf Grundlage des durch die Magnetfelderfassungsmittel (162) erfassten Magnetfelds dient, wobei das Steuermittel (14) einen Betrag der Pedaltretkraft auf Grundlage eines Durchschnitts von Erfassungssignalen von den jeweiligen Magnetfelderfassungsmitteln (162) berechnet.

2. Kraftunterstütztes Fahrrad nach Anspruch 1, bei dem das Magnetfelderfassungsmittel (162) an einer Stelle nahe zu dem Magneten (164) angeordnet ist.

3. Kraftunterstütztes Fahrrad nach Anspruch 1, bei dem die Magnetfelderfassungsmittel (162) jeweils an wenigstens drei vorgegebenen Stellen innerhalb einer Ebene, die senkrecht zu der axialen Linie (5) des Antriebsschafts (4) liegt, angeordnet sind, wobei die wenigstens drei vorgegebenen Stellen innerhalb der Ebene, die senkrecht zu der axialen Linie (5) des Antriebsschafts (4) liegt, liegen, radial und gleich weit entfernt von der axialen Linie (5) sind und in einer Umfangsrichtung gleich beabstandet sind.

4. Kraftunterstütztes Fahrrad nach einem der Ansprüche 1 bis 3, bei dem die vorgegebene Stelle eine feste Stelle an einem Fahrradkörperrahmen (3) ist.

5. Kraftunterstütztes Fahrrad nach einem der Ansprüche 1 bis 4, bei dem das elastische Instrumentenmittel (137) aus einer Gruppe ausgewählt ist, die aus einer Tellerfeder, einer Spiralfeder und einem elastischen Gummimaterial besteht.

6. Kraftunterstütztes Fahrrad nach einem der Ansprüche 1 bis 5, bei dem
die zwei Blöcke (100, 112) ein Zahnblock (112), der mehrere an einer ersten Eingriffsoberfläche (121) ausgebildete Sperrzähne (114) umfasst, und ein Rastenblock (100) sind, der mehrere an einer zweiten Eingriffsoberfläche (110) ausgebildete Sperrrasten (102) umfasst, wobei der Zahnblock (112) und der Rastenblock (100) so angeordnet sind, dass die erste und die zweite Eingriffsoberfläche (121, 110) einander in einer im Wesentlichen senkrechen Ausrichtung zu der axialen Richtung direkt zugewandt sind, wobei
die mehreren Sperrzähne (114) aus mit Bezug auf die erste Eingriffsoberfläche (121) relativ steilen Rampen (118) und relativ flachen Rampen (116) bestehen, die an der ersten Eingriffsoberfläche (121) abwechselnd und periodisch in der Umfangsrichtung des Zahnblocks (112) angeordnet sind; und
jede der Sperrrasten (102) so ausgelegt ist, dass eine Längenrichtung derselben auf beide Seiten von einer Mittellinie, die einen vorgegebenen Winkel mit Bezug auf die zweite Eingriffsoberfläche (110) definiert, federnd schwenken kann, wobei
wenn der Antriebsschaft (4) sich in der einen Richtung dreht, die Sperrrasten (102) in einer Schwenkbewegung an die relativ steilen Rampen (118) zum Anliegen kommen, so dass die relative Drehung zwischen dem Rastenblock (100) und dem Zahnblock (112) gesperrt wird, und wenn der Antriebsschaft (4) sich in einer anderen Richtung entgegengesetzt zu der einen Richtung dreht, die Sperrrasten (102) an die relativ flachen Rampen (116) zum Anliegen kommen, so dass die relative Drehung dazwischen ermöglicht wird.

7. Kraftunterstütztes Fahrrad nach Anspruch 1, das ferner umfasst:
ein Elektromotoreinheitsmittel (11) zum Erzeugen einer Hilfstriebkraft; und
ein Triebkraftübertragungsgetriebe (200), das konzentrisch an einem Zahnrad (2) befestigt ist, wobei
das Triebkraftübertragungsgetriebe (200) und ein Abtriebszahnrad des Elektromotoreinheitsmittels (11) so ineinander greifen, dass ein Kraftvereinigungsmittel zum zusätzlichen Zuführen der Hilfstriebkraft neben einer Pedaltretkraft gebildet wird, und
der andere der zwei Blöcke der Einwegkupplung (99) an einer Plattenoberfläche des Triebkraftübertragungsgetriebes (200) definiert ist.

8. Kraftunterstütztes Fahrrad nach Anspruch 7, bei dem
mehrere Magneten (202) fest an dem Triebkraftübertragungsgetriebe (200) an einer Seite der Plattenoberflächen des Getriebes angebracht sind, so dass jeweilige Magneten (202) in einer Umfangsrichtung gleich weit voneinander beabstandet sind,
wobei das kraftunterstützte Fahrrad ferner umfasst:
ein Magnetfelderfassungsmittel (210), das an einem Fahrradkörper neben der einen Seite der Plattenoberflächen des Triebkraftübertragungsgetriebes (200) befestigt ist; und
ein Zählermittel (14) zum Zählen von Magnetfeldpulssignalen von dem Magnetfelderfassungsmittel (210), wobei
eine Fahrradgeschwindigkeit auf Grundlage eines Zählwerts für die durch das Zählermittel gezählten Magnetfeldpulssignale bestimmt wird.

9. Drehmomenterfassungsvorrichtung, umfassend:
einen Antriebsschaft,
ein Einwegkupplungsmittel (99), das dafür eingerichtet ist, nur Umdrehungen des Antriebsschafts (4) in einer Richtung zu übertragen, wobei das Einwegkupplungsmittel (99) wenigstens zwei Blöcke (100, 112), die nebeneinander entlang der axialen Richtung des Antriebsschafts angeordnet sind, und ein elastisches Instrumentenmittel (137) aufweist, und wobei während Umdrehungen in der einen Richtung die zwei Blöcke (100, 112) miteinander in Eingriff stehen, so dass ein Zwischenblockabstand in der axialen Richtung unter dem Widerstand, der durch eine elastische Kraft von dem elastischen Instrumentenmittel (137) bewirkt wird, vergrößert wird, und während Umdrehungen in einer der einen Richtung entgegengesetzten Richtung die zwei Blöcke (100, 112) voneinander gelöst sind, so dass der Zwischenblockabstand in der axialen Richtung verringert wird;
ein Element (161, 164);
ein Erfassungsmittel (162), das an einer Stelle angeordnet ist, an der sich eine Eigenschaft des Elements (161, 164) in Verbindung mit einer Verformung des Einwegkupplungsmittels (99), die in Abhängigkeit von einem auf den Antriebsschaft (4) wirkenden Drehmoment auftritt, ändert, wobei eine Änderung der Eigenschaft durch eine Vergrößerung oder Verringerung des Abstands zwischen den zwei Blöcken (100, 112) bewirkt wird; und
ein Berechnungsmittel (14) zum Berechnen des Drehmoments auf Grundlage der durch das Erfassungsmittel (162) erfassten Eigenschaft;
wobei einer der zwei Blöcke (100, 112) an dem Antriebsschaft (4) auf eine solche Weise angebracht ist, dass der eine der zwei Blöcke (100, 112) verschiebbar entlang der axialen Richtung bewegt wird und gleichzeitig eine relative Drehung des einen der zwei Blöcke (100, 112) mit Bezug auf den Antriebsschaft (4) verhindert wird, und der andere der zwei Blöcke (100, 112) nicht mit dem Antriebsschaft (4) gekoppelt ist, wobei der eine der zwei Blöcke (100, 112) an der entgegengesetzten Seite zu dem anderen der zwei Blöcke (100, 112) auf eine solche Weise zum Anliegen an das elastische Instrumentenmittel (137) gebracht wird, dass das elastische Instrumentenmittel (137) in Verbindung mit dem einen der zwei Blöcke (100, 112) drehbar ist;
**dadurch gekennzeichnet, dass** das Element ein Magnet (161, 164) ist, der Magnet (161) in einer Ringform ausgebildet und an dem einen der zwei Blöcke (100, 112) konzentrisch zu dem Antriebsschaft (4) angebracht ist, oder der Magnet (164) an einer Stelle nahe zu dem Erfassungsmittel (162) angeordnet ist, während ein magnetisches Material oder ein diamagnetisches Material (163) in einer Ringform ausgebildet und an dem einen der zwei Blöcke (100, 112) konzentrisch zu dem Antriebsschaft (4) angebracht ist;
dass das Erfassungsmittel (162) Magnetfelderfassungsmittel (162) umfasst, die jeweils an wenigstens zwei vorgegebenen Stellen innerhalb einer Ebene, die senkrecht zu der axialen Linie (5) des Antriebsschafts (4) liegt, angeordnet sind, an denen sich das Magnetfeld des Magnets (161, 164) in Verbindung mit einer Verformung des Einwegkupplungsmittels (99), die in Abhängigkeit von dem auf den Schaft (4) wirkenden Drehmoment auftritt, ändert, wobei eine Änderung des Magnetfelds durch eine Vergrößerung oder Verringerung des Abstands zwischen den zwei Blöcken (100, 112) bewirkt wird, von denen einer mit Bezug auf die vorgegebenen Stellen bewegt wird; und
dass das Berechnungsmittel (14) zum Berechnen des Drehmoments auf Grundlage des durch die Magnetfelderfassungsmittel (162) erfassten Magnetfelds dient, wobei das Berechnungsmittel (14) einen Betrag der Pedaltretkraft auf Grundlage eines Durchschnitts von Erfassungssignalen von den jeweiligen Magnetfelderfassungsmitteln (162) berechnet.

10. Drehmomenterfassungsvorrichtung nach Anspruch 9, bei der das Magnetfelderfassungsmittel (162) an einer Stelle nahe zu dem Magneten (164) angeordnet ist.

11. Drehmomenterfassungsvorrichtung nach Anspruch 9, bei der die Magnetfelderfassungsmittel (162) jeweils an wenigstens drei vorgegebenen Stellen innerhalb einer Ebene, die senkrecht zu der axialen Linie (5) des Schafts (4) liegt, angeordnet sind, wobei die wenigstens drei vorgegebenen Stellen innerhalb der Ebene, die senkrecht zu der axialen Linie (5) des Schafts (4) liegt, liegen, radial und gleich weit entfernt von der axialen Linie (5) sind und in einer Umfangsrichtung gleich beabstandet sind.

12. Drehmomenterfassungsvorrichtung nach einem der Ansprüche 9 bis 10, bei der die vorgegebene Stelle eine feste Stelle an einem Fahrradkörperrahmen (3) ist.

13. Drehmomenterfassungsvorrichtung nach einem der Ansprüche 9 bis 12, bei der das elastische Instrumentenmittel (137) aus einer Gruppe ausgewählt ist, die aus einer Tellerfeder, einer Spiralfeder und einem elastischen Gummimaterial besteht.

14. Drehmomenterfassungsvorrichtung nach einem der Ansprüche 9 bis 13, bei der
die zwei Blöcke (100, 112) ein Zahnblock (112), der mehrere an einer ersten Eingriffsoberfläche (121) ausgebildete Sperrzähne (114) umfasst, und ein Rastenblock (100) sind, der mehrere an einer zweiten Eingriffsoberfläche (110) ausgebildete Sperrrasten (102) umfasst, wobei der Zahnblock (112) und der Rastenblock (100) so angeordnet sind, dass die erste und die zweite Eingriffsoberfläche (121, 110) einander in einer im Wesentlichen senkrechen Ausrichtung zu der axialen Richtung direkt zugewandt sind, wobei
die mehreren Sperrzähne (114) aus mit Bezug auf die erste Eingriffsoberfläche (121) relativ steilen Rampen (118) und relativ flachen Rampen (116) bestehen, die an der ersten Eingriffsoberfläche (121) abwechselnd und periodisch in der Umfangsrichtung des Zahnblocks (112) angeordnet sind; und
jede der Sperrrasten (102) so ausgelegt ist, dass eine Längenrichtung derselben auf beide Seiten von einer Mittellinie, die einen vorgegebenen Winkel mit Bezug auf die zweite Eingriffsoberfläche (110) definiert, federnd schwenken kann, wobei
wenn der Schaft (4) sich in der einen Richtung dreht, die Sperrrasten (102) in einer Schwenkbewegung an die relativ steilen Rampen (118) zum Anliegen kommen, so dass die relative Drehung zwischen dem Rastenblock (100) und dem Zahnblock (112) gesperrt wird, und wenn der Schaft (4) sich in einer anderen Richtung entgegengesetzt zu der einen Richtung dreht, die Sperrrasten (102) an die relativ flachen Rampen (116) zum Anliegen kommen, so dass die relative Drehung dazwischen ermöglicht wird.

15. Drehmomenterfassungsvorrichtung nach Anspruch 9, die ferner ein Triebkraftübertragungsgetriebe (200) umfasst, das mit einem Abtriebszahnrad eines Triebkrafterzeugungseinheitsmittels zum Erzeugen einer Triebkraft in Eingriff zu bringen ist, wobei
der andere der zwei Blöcke (100, 112) der Einwegkupplung (99) an einer Plattenoberfläche des Triebkraftübertragungsgetriebes (200) ausgebildet ist.

16. Drehmomenterfassungsvorrichtung nach Anspruch 15, bei der
mehrere Magneten (202) fest an dem Triebkraftübertragungsgetriebe (200) an einer Seite der Plattenoberflächen des Getriebes angebracht sind, so dass jeweilige Magneten (202) in einer Umfangsrichtung gleich weit voneinander beabstandet sind,
wobei die Drehmomenterfassungsvorrichtung umfasst:
ein Magnetfelderfassungsmittel (210), das neben der einen Seite der Plattenoberflächen des Triebkraftübertragungsgetriebes (200) angeordnet ist; und
ein Zählermittel (14) zum Zählen von Magnetfeldpulssignalen von dem Magnetfelderfassungsmittel (210), wobei
eine Umdrehungsrate des Triebkraftübertragungsgetriebes auf Grundlage eines Zählwerts der durch das Zählermittel (14) gezählten Magnetfeldpulssignale bestimmt wird.

## Revendications

1. Bicyclette assistée (1) dans laquelle une puissance motrice auxiliaire peut être introduite en plus, en fonction d'une force de pédalage agissant sur un arbre d'entraînement (4), ladite bicyclette assistée (1) comprenant:
un moyen d'embrayage unidirectionnel (99) couplé à l'arbre d'entraînement afin de ne permettre que des révolutions dudit arbre d'entraînement dans une direction, destinées à être transmises à un arbre d'entraînement, dans laquelle ledit moyen d'embrayage unidirectionnel a au moins deux blocs (100, 112) disposés de manière adjacente entre eux le long de la direction axiale dudit arbre d'entraînement et un moyen d'instrument élastique (137), et dans lequel pendant les révolutions dans ladite une direction, lesdits deux blocs (100, 112) sont mis en prise entre eux afin d'augmenter un espacement entre les blocs dans ladite direction axiale sous l'effet de la résistance fournie par une force élastique provenant dudit moyen d'instrument élastique (137) et pendant les révolutions dans une direction opposée à ladite une direction, lesdits deux blocs (100, 112) sont dégagés l'un de l'autre afin de diminuer l'espacement entre les blocs dans ladite direction axiale;
un élément (161, 164);
un moyen de détection (162) disposé à un emplacement où une caractéristique, par ledit élément (161, 164), peut varier en association avec une déformation dudit moyen d'embrayage unidirectionnel (99), ayant lieu en fonction de ladite force de pédalage, dans laquelle toute variation de ladite caractéristique est effectuée par toute augmentation ou réduction dudit espacement entre lesdits deux blocs (100, 112); et
un moyen de commande (14) pour commander ladite puissance motrice auxiliaire basée sur la caractéristique détectée par ledit moyen de détection (162);
dans laquelle l'un ou l'autre desdits deux blocs (100, 112) est monté sur ledit arbre d'entraînement (4) de sorte que ledit un ou l'autre desdits deux blocs est déplacé de manière coulissante le long de ladite direction axiale et simultanément une rotation relative dudit un ou l'autre desdits deux blocs par rapport audit arbre d'entraînement est empêchée, et l'autre desdits deux blocs (100, 112) est couplé audit arbre d'entraînement (4) afin de permettre la transmission d'un couple à ce dernier, dans laquelle ledit un desdits deux blocs du côté opposé audit autre desdits deux blocs est amené en butée avec ledit moyen d'instrument élastique (137) de sorte que ledit moyen d'instrument élastique (137) peut tourner en association avec ledit un desdits deux blocs (100, 112);
**caractérisée en ce que** ledit élément est un aimant (161, 164), l'aimant (161) étant formé selon une forme annulaire et fixé audit un ou à l'autre parmi lesdits deux blocs (100, 112) de manière concentrique par rapport audit arbre d'entraînement (4) ou bien ledit aimant (164) étant disposé à un emplacement à proximité dudit moyen de détection (162) alors qu'un matériau magnétique ou un matériau diamagnétique (163) est formé selon une forme annulaire et fixé audit un ou à l'autre parmi lesdits deux blocs (100, 112) de manière concentrique par rapport audit arbre d'entraînement (4);
**en ce que** ledit moyen de détection (162) comprend un moyen de détection de champ magnétique (162) disposé au moins à deux emplacements prédéterminés dans un plan orthogonal à la ligne axiale (5) dudit arbre d'entraînement (4) respectivement, où le champ magnétique, par ledit aimant (161, 164), peut varier en association avec une déformation dudit moyen d'embrayage unidirectionnel (99) ayant lieu en fonction de ladite force de pédalage, dans laquelle toute variation dudit champ magnétique est effectuée par n'importe quelle augmentation ou réduction dudit espacement entre lesdits deux blocs (100, 112), dont l'un ou l'autre est déplacé par rapport auxdits emplacements prédéterminés; et
**en ce que** ledit moyen de commande (14) est prévu pour commander ladite puissance motrice auxiliaire en fonction du champ magnétique détecté par ledit moyen de détection de champ magnétique (162), le moyen de commande (14) calculant une grandeur de ladite force de pédalage en fonction d'une moyenne des signaux de détection provenant dudit moyen de détection de champ magnétique (162) respectif.

2. Bicyclette assistée selon la revendication 1, dans laquelle ledit moyen de détection de champ magnétique (162) est disposé à un emplacement situé à proximité dudit aimant (164).

3. Bicyclette assistée selon la revendication 1, dans laquelle lesdits moyens de détection de champ magnétique (162) sont disposés dans au moins trois emplacements prédéterminés dans un plan orthogonal par rapport à la ligne axiale (5) dudit arbre d'entraînement (4) respectivement, lesdits au moins trois emplacements prédéterminés étant dans ledit plan orthogonal par rapport à ladite ligne axiale (5) dudit arbre d'entraînement (4), radialement et à égale distance de ladite ligne axiale (5) et espacés à égale distance dans une direction circonférentielle.

4. Bicyclette assistée selon l'une quelconque des revendications 1 à 3, dans laquelle ledit emplacement prédéterminé est un emplacement fixe sur un cadre de bicyclette (3).

5. Bicyclette assistée selon l'une quelconque des revendications 1 à 4, dans laquelle ledit moyen d'instrument élastique (137) est sélectionné dans un groupe comprenant un ressort de disque conique, un ressort hélicoïdal et un matériau élastique caoutchouteux.

6. Bicyclette assistée selon l'une quelconque des revendications 1 à 5, dans laquelle:
lesdits deux blocs (100, 112) sont un bloc denté (112) comprenant une pluralité de dents d'encliquetage (114) formées dans une première surface de mise en prise (121) et un bloc de cliquet (100) comprenant une pluralité de cliquets d'encliquetage (102) formés dans une seconde surface de mise en prise (110), ledit bloc denté (112) et ledit bloc de cliquet (100) étant positionnés de sorte que lesdites première et seconde surfaces de mise en prise (121, 110) se font directement face dans une orientation sensiblement orthogonale par rapport à ladite direction axiale, dans laquelle:
ladite pluralité de dents d'encliquetage (114) est composée de rampes relativement brusques (118) et de rampes relativement modérées (116) par rapport à la première surface de mise en prise (121), qui sont disposées dans ladite première surface de mise en prise (121) de manière alternée et périodique dans la direction circonférentielle dudit bloc denté (112); et
chacun desdits cliquets d'encliquetage (102) est configuré de sorte que sa direction de longueur peut pivoter de manière élastique de chaque côté à partir d'un axe central définissant un angle prédéterminé par rapport à ladite seconde surface de mise en prise (110), dans laquelle:
lorsque ledit arbre d'entraînement (4) tourne dans ladite une direction, lesdits cliquets d'encliquetage (102) en mouvement pivotant viennent en butée contre lesdites rampes relativement brusques (118) afin de bloquer la rotation relative entre ledit bloc de cliquet (100) et ledit bloc denté (112), et lorsque ledit arbre d'entraînement (4) tourne dans une autre direction opposée à ladite une direction, lesdits cliquets d'encliquetage (102) viennent en butée contre lesdites rampes relativement modérées (116) afin de permettre ladite rotation relative entre elles.

7. Bicyclette assistée selon la revendication 1, comprenant en outre:
un moyen d'unité électromotrice (11) pour générer une puissance motrice auxiliaire; et
un engrenage de transmission de puissance motrice (200) fixé de manière concentrique à un pignon (2), dans laquelle:
ledit engrenage de transmission de puissance motrice (200) et un engrenage de sortie dudit moyen d'unité électromotrice (11) sont couplés entre eux afin de construire un moyen de combinaison de force pour introduire, en plus, ladite puissance motrice auxiliaire parallèlement à une force de pédalage, et
ledit autre desdits deux blocs dudit embrayage unidirectionnel (99) est défini dans une surface de plaque dudit engrenage de transmission de puissance motrice (200).

8. Bicyclette assistée selon la revendication 7, dans laquelle :
une pluralité d'aimants (202) est fixée de manière fixe audit engrenage de transmission de puissance motrice (200) d'un côté desdites surfaces de plaque dudit engrenage de sorte que les aimants (202) respectifs sont espacés à égale distance dans une direction circonférentielle les uns des autres,
ladite bicyclette assistée comprenant en outre:
un moyen de détection de champ magnétique (210) fixé sur un corps de bicyclette adjacent audit un côté desdites surfaces de plaque dudit engrenage de transmission de puissance motrice (200); et
un moyen de compteur (14) pour compter des signaux d'impulsion de champ magnétique provenant dudit moyen de détection de champ magnétique (210), dans laquelle:
une vitesse de bicyclette est déterminée en fonction d'une valeur de comptage pour les signaux d'impulsion de champ magnétique comptés par ledit moyen de compteur.

9. Appareil de détection de couple, comprenant:
un arbre d'entraînement,
un moyen d'embrayage unidirectionnel (99) pouvant fonctionner pour transmettre exclusivement des révolutions de l'arbre d'entraînement (4) dans une direction, dans lequel ledit moyen d'embrayage unidirectionnel (99) a au moins deux blocs (100, 112) disposés de manière adjacente l'un par rapport à l'autre le long de la direction axiale dudit arbre d'entraînement et un moyen d'instrument élastique (137), et dans lequel pendant les révolutions dans ladite une direction, lesdits deux blocs (100, 112) sont mis en prise entre eux afin d'augmenter un espacement entre les blocs dans ladite direction axiale sous la résistance fournie par une force élastique provenant dudit moyen d'instrument élastique (137) et pendant les révolutions dans une direction opposée à ladite une direction, lesdits deux blocs (100, 112) sont dégagés l'un de l'autre afin de diminuer l'espacement entre les blocs dans ladite direction axiale;
un élément (161, 164);
un moyen de détection (162) disposé dans un emplacement où une caractéristique, par ledit élément (161, 164), varie en association avec une déformation dudit moyen d'embrayage unidirectionnel (99) ayant lieu en fonction d'un couple agissant sur ledit arbre d'entraînement (4), dans lequel toute variation de ladite caractéristique est effectuée par n'importe quelle augmentation ou réduction dudit espacement entre lesdits deux blocs (100, 112); et
un moyen d'ordinateur (14) pour calculer ledit couple en fonction de la caractéristique détectée par ledit moyen de détection (162);
dans lequel l'un ou l'autre desdits deux blocs (100, 112) est monté sur ledit arbre d'entraînement (4) de sorte que ledit un ou l'autre desdits deux blocs (100, 112) est déplacé de manière coulissante le long de ladite direction axiale et simultanément une rotation relative dudit un ou l'autre desdits deux blocs (100, 112) par rapport audit arbre d'entraînement (4) est empêchée, et l'autre desdits deux blocs (100, 112) n'est pas couplé audit arbre d'entraînement (4), dans lequel ledit un desdits deux blocs (100, 112) du côté opposé audit autre desdits deux blocs (100, 112) est amené en butée contre ledit moyen d'instrument élastique (137) de sorte que ledit moyen d'instrument élastique (137) peut tourner en association avec ledit un desdits deux blocs (100, 112);
**caractérisé en ce que** ledit élément est un aimant (161, 164), l'aimant (161) étant formé selon une forme annulaire et fixé audit un ou à l'autre desdits deux blocs (100, 112) de manière concentrique avec ledit arbre d'entraînement (4) ou ledit aimant (164) étant disposé à un emplacement situé à proximité dudit moyen de détection (162) alors qu'un matériau magnétique ou un matériau diamagnétique (163) est formé selon une forme annulaire et fixé audit un ou à l'autre desdits deux blocs (100, 112) de manière concentrique par rapport audit arbre d'entraînement (4);
**en ce que** ledit moyen de détection (162) comprend un moyen de détection de champ magnétique (162) disposé à au moins deux emplacements prédéterminés dans un plan orthogonal par rapport à la ligne axiale (5) dudit arbre d'entraînement (4) respectivement, où le champ magnétique, par ledit aimant (161, 164), varie en association avec une déformation dudit moyen d'embrayage unidirectionnel (99) ayant lieu en fonction dudit couple agissant sur ledit arbre (4), dans lequel toute variation dudit champ magnétique est effectuée par n'importe quelle augmentation ou réduction dudit espacement entre lesdits deux blocs (100, 112), dont chacun est déplacé par rapport auxdits emplacements prédéterminés; et
**en ce que** ledit moyen d'ordinateur (14) est prévu pour calculer ledit couple en fonction du champ magnétique détecté par ledit moyen de détection de champ magnétique (162), le moyen d'ordinateur (14) calculant une grandeur de ladite force de pédalage en fonction d'une moyenne des signaux de détection provenant dudit moyen de détection de champ magnétique (162) respectif.

10. Appareil de détection de couple selon la revendication 9, dans lequel ledit moyen de détection de champ magnétique (162) est disposé à un emplacement situé à proximité dudit aimant (164).

11. Appareil de détection de couple selon la revendication 9, dans lequel lesdits moyens de détection de champ magnétique (162) sont disposés dans au moins trois emplacements dans un plan orthogonal à la ligne axiale (5) dudit arbre (4) respectivement, lesdits au moins trois emplacements prédéterminés étant dans ledit plan orthogonal par rapport à ladite ligne axiale (5) dudit arbre (4), radialement et à équidistance de ladite ligne axiale (5) et à égale distance dans une direction circonférentielle.

12. Appareil de détection de couple selon l'une quelconque des revendications 9 à 10, dans lequel ledit emplacement prédéterminé est un emplacement fixe sur un cadre de bicyclette (3).

13. Appareil de détection de couple selon l'une quelconque des revendications 9 à 12, dans lequel ledit moyen d'instrument élastique (137) est choisi dans un groupe comprenant un ressort de disque conique, un ressort hélicoïdal et un matériau élastique caoutchouteux.

14. Appareil de détection de couple selon l'une quelconque des revendications 9 à 13, dans lequel:
lesdits deux blocs (100, 112) sont un bloc denté (112) comprenant une pluralité de dents d'encliquetage (114) formées dans une première surface de mise en prise (121) et un bloc de cliquet (100) comprenant une pluralité de cliquets d'encliquetage (102) formés dans une seconde surface de mise en prise (110), ledit bloc denté (112) et ledit bloc de cliquet (100) étant positionnés de sorte que lesdites première et seconde surfaces de mise en prise (121, 100) se font directement face dans une orientation sensiblement orthogonale à ladite direction axiale, dans lequel:
ladite pluralité de dents d'encliquetage (114) est composée de rampes relativement brusques (118) et de rampes relativement modérées (116) par rapport à la première surface de mise en prise (121), qui sont disposées dans ladite première surface de mise en prise (121) de manière alternée et périodique dans la direction circonférentielle dudit bloc denté (112); et
chacun desdits cliquets d'encliquetage (102) est configuré de sorte que sa direction de longueur peut pivoter de manière élastique de chaque côté à partir d'un axe central définissant un angle prédéterminé par rapport à la seconde surface de mise en prise (110), dans lequel:
lorsque ledit arbre (4) tourne dans ladite une direction, lesdits cliquets d'encliquetage (102) en mouvement pivotant viennent en butée contre lesdites rampes relativement brusques (118) afin de bloquer la rotation relative entre ledit bloc de cliquet (100) et ledit bloc denté (112), et lorsque ledit arbre (4) tourne dans une autre direction opposée à ladite une direction, lesdits cliquets d'encliquetage (102) viennent en butée contre lesdites rampes relativement modérées (116) afin de permettre ladite rotation relative entre elles.

15. Appareil de détection de couple selon la revendication 9, comprenant en outre un engrenage de transmission de puissance motrice (200) à coupler avec un engrenage de sortie d'un moyen d'unité de génération de puissance motrice pour générer une puissance motrice, dans lequel:
ledit autre desdits deux blocs (100, 112) dudit embrayage unidirectionnel (99) est formé sur une surface de plaque dudit engrenage de transmission de puissance motrice (200).

16. Appareil de détection de couple selon la revendication 15, dans lequel:
une pluralité d'aimants (202) est fixée de manière fixe audit engrenage de transmission de puissance motrice (200) d'un côté desdites surfaces de plaque dudit engrenage de sorte que les aimants (202) respectifs sont espacés à égale distance dans une direction circonférentielle les uns des autres,
ledit appareil de détection de couple comprenant:
un moyen de détection de champ magnétique (210) disposé de manière adjacente audit un côté des surfaces de plaque dudit engrenage de transmission de puissance motrice (200); et
un moyen de compteur (14) pour compter des signaux d'impulsion de champ magnétique provenant dudit moyen de détection de champ magnétique (210), dans lequel:
une vitesse de rotation dudit engrenage de transmission de puissance motrice est déterminée en fonction d'une valeur de comptage des signaux d'impulsion de champ magnétique comptés par ledit moyen de compteur (14).
